# EUROPEAN PATENT SPECIFICATION

(11) **EP 1 243 854 B1**
(45) Date of publication and mention of the grant of the patent: **20.07.2005**
(21) Application number: 02251528.2
(22) Date of filing: 05.03.2002
(51) Int. Cl.: F23D 17/00, F23R 3/36, F02C 3/28, F23D 11/10, F02C 1/00

(54) **Fuel injector**
Brennstoffeinspritzventil
Injecteur de carburant

(30) Priority: 09.03.2001 GB 0105778
(43) Date of publication of application: 25.09.2002
(73) Proprietor: ALSTOM (Switzerland) Ltd, 5401 Baden (CH)
(72) Inventor: Kelsall, Gregory John, Leicestershire LE9 6SR (GB); Senior, Peter, 92300 Levallois-Perret, Hauts-de-Seine (FR)
(74) Representative: Dargavel, Laurence Peter

(56) References cited:
- EP-A- 0 660 038
- EP-A- 0 898 117
- EP-A- 0 905 443
- GB-A- 2 283 088
- US-A- 4 726 192

## Description

### Field of the Invention

This invention relates to fuel injectors for gas turbine engines which operate on gas and at least one alternative fuel. A typical application is to a gas turbine engine operating on gas as the primary or main fuel and liquid as the secondary or stand-by fuel.

### Background to the invention

Such fuel injectors typically comprise separate injector passages for the gas and liquid fuels, the passages leading to separate sets of fuel injection orifices for each of the two fuels so that each fuel is separately injected into a combustion chamber associated with the fuel injector. To encourage good mixing of the fuels with the air in the combustion chamber, it is normal to "pre-swirl" both the liquid and the gas fuels before they are injected into the combustion chamber. This is achieved by including so-called "swirler vanes" in the injector passages before or in the injection orifices, these vanes deflecting the flow to impart a required amount of swirling motion to the fuels as they pass over the vanes.

During the operation of such a dual fuel gas turbine on the secondary fuel only, the primary fuel injector orifices in the fuel injector are subject to ingress of hot combustion products from the primary combustion zone, unless measures are taken to prevent it. Hence, circulation of the hot combustion products into the primary fuel passages in the injector can occur. This problem is exaggerated for burners which utilise low calorific value (LCV) gas fuel as the primary fuel because the gas injection orifices are larger for such systems than those designed for natural gas operation. The ingestion of combustion products in this way may cause damage to or blockage of the gas passages.

It is already known to address this problem by purging the primary gas fuel passages when the injector is operating on the secondary fuel, using e.g., compressed air or steam.

Patent no. GB 2,283,088 B discloses an earlier design of injector which makes use of purge holes to admit compressed air from the compressor to the primary fuel supply passage for this purging process. As such it has substantially alleviated the difficulties discussed above with regard to the primary fuel orifices. However, in a later design of injector of a generally similar type, ingress of combustion gas products into the primary fuel supply passages from the combustion chamber through an outer array of smaller injection orifices still occurs under some operational conditions.

### Summary of the Invention

The present invention provides a fuel injector for a combustor of a gas turbine engine operable on first and second fluid fuels, in which a plurality of fuel orifices for injecting the first fuel into the combustor are exposed to combustion products during operation of the engine on the second fuel, the fuel injector comprising:
an fuel manifold having an upstream portion for receiving the first fuel and a downstream portion for supplying the first fuel to the plurality of fuel orifices;
dividing wall means dividing the downstream portion of the fuel manifold into a radially outer annular fuel supply passage for supplying a radially outer set of the plurality of fuel orifices and a radially inner annular fuel supply passage for supplying a radially inner set of the plurality of fuel orifices;
an annular air passage for compressed air defined between an external wall of the fuel manifold and an outer shroud member surrounding the fuel injector;
a first set of air purge holes in the external manifold wall, disposed upstream of the dividing wall means to permit fluid connection between the air passage and the annular fuel manifold and a second set of air purge holes in the external manifold wall downstream of the first set of purge holes to permit direct fluid connection between the air passage and the radially outer annular fuel supply passage, whereby pressure in both the radially inner and outer annular fuel supply passages is maintained greater than that in the combustor during operation of the engine on the second fuel, thus preventing ingress of hot combustion products through both the radially inner and outer sets of fuel orifices.

The second set of air purge holes may be radially oriented to direct purge air to impinge on the dividing wall means between the radially outer fuel supply passage and the radially inner fuel supply passage, which has the beneficial effect of cooling it. However, the second set of air purge holes are preferably inclined with respect to the longitudinal extent of the radially outer annular fuel supply passage so as to direct purge air into it with both radial and downstream components of flow.

In order that the radially inner set of fuel orifices injects the first fuel into the combustor with components of velocity in both the downstream and radially outward directions, these orifices are provided in a generally conical end wall of the radially inner annular fuel supply passage, the end wall being convergent in the downstream direction from the radially outer set of fuel orifices, in which case the second set of air purge holes may be situated and inclined so as to direct purge air towards radially inner edges of the radially outer set of fuel orifices and thence along the outer surface of the conical end wall.

Preferably, the outlet of the radially outer annular fuel supply passage is provided with a circular array of fluid deflecting vanes adapted to impart swirling motion to fluid flowing therepast. Advantageously, each purge hole in the second set of purge holes is located between adjacent ones of these fluid deflecting vanes.

For introducing the compressed air from the annular air passage into the combustor, exit orifices of the annular air passage are defined between adjacent fluid deflecting vanes in an annular array thereof, which induce swirling motion in fluid flow therepast.

To facilitate a lean-burn mode of operation of the combustor during operation using the first fuel only, the first and second sets of purge holes are sized to allow sufficient of the first fuel to exit through the purge holes into the air passage to mix with the compressed air and thereby to have an effect on the combustion process equivalent to reducing the calorific value of the gas fuel so as to reduce production of oxides of nitrogen in the combustion process.

### Brief Description of the Drawings

Exemplary embodiments of the invention will now be described with reference to the accompanying drawings, in which:
Figure 1 is an axial section of a fuel injector according to the prior art; and
Figure 2 is an axial section of a fuel injector according to the invention.

### Detailed Description of the Drawings

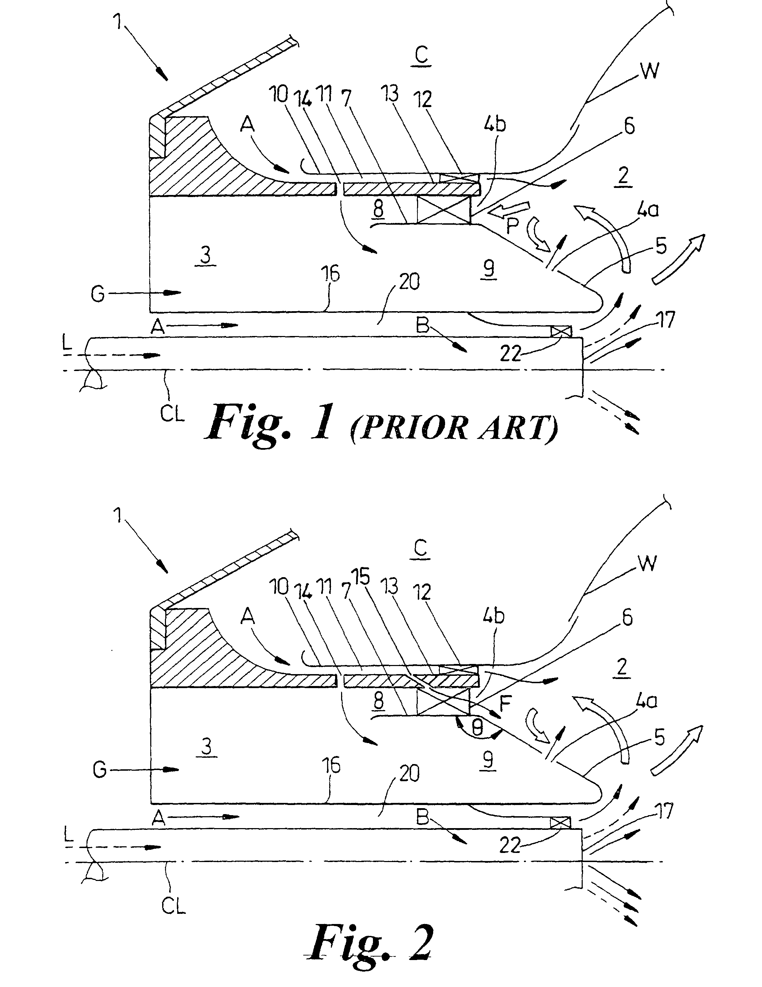

Referring to Figure 1, the injector assembly 1 is of circular cross-section and is mounted in the upstream end of a combustor whose combustion chamber wall W is divergent away from the injector 1 in the downstream direction. In the present example, the centrelines CL of the combustor and the injector are coincident, the combustor being of the type comprising a circular section "can". However, the invention may also be applied to annular combustors, in which case the injector 1 may be one of a number of similar injectors equiangularly spaced around the upstream end of the combustor annulus. Upstream of the injectors is a source of combustion air, i.e. an air compressor (not shown) of the gas turbine engine incorporating the combustor. Compressed air from the compressor is ducted to the space surrounding the combustors and passes through the injectors to permit combustion of fuel with the air in the 'primary combustion zone' 2 of the combustor downstream of the injectors.

The primary fuel G, a low calorific value gas, is fed from a manifold (not shown) via supply passages (not shown) to an annular gas passage or manifold 3 which feeds radially inner and outer rings of gas orifices 4a, 4b. A cylindrical wall 7 divides the downstream portion of the annular gas manifold 3 into a radially outer annular fuel supply passage 8, which supplies the radially outer ring of gas orifices 4b, and a radially inner annular fuel supply passage 9 for supplying the radially inner ring of fuel orifices 4a. The cylindrical wall 7 is a continuation of a generally conical downstream end wall 5 of the inner annular fuel supply passage 9, the cone shape being convergent in the downstream direction. Gas injection orifices 4a are provided in this conical portion so that they inject the gas fuel into the combustor primary zone 2 with components of velocity in both the downstream and radially outward directions. The jets of fuel emerging from the orifices 4a in conical wall 5 may be likened to spokes extending from a hub.

The radially outer annular fuel supply passage 8 contains an annular array of small guide vanes 6 set at a shallow angle to the downstream direction, meaning that the vanes 6 are offset in the circumferential direction between their upstream and downstream ends. The orifices 4b are defined between adjacent vanes 6, which act as 'swirlers' to give a rotational motion about the centreline CL and a degree of turbulence to the fuel or fuel-air mixture flowing past them.

Surrounding the gas manifold 3 is a shroud 10 defining an air passage 11, which is open at the upstream end to admit compressed air A from a chamber C surrounding the injector assembly 1. The flow of compressed air is indicated by solid line arrows. This air passes out of the passage 11 at its downstream end into the combustion chamber to mix with fuel from the adjacent orifices 4a and 4b. Similarly to fuel passage 8, the downstream end of the air passage 11 is fitted with swirlers 12 to improve the mixing of the gas fuel and compressed air.

An outer wall 13 of the manifold 3 has a ring of equiangularly spaced radial holes 14 therethrough around its circumference at an axial position just upstream of the entry to passage 8 defined by the upstream end of cylindrical wall 7. The arrangement is such that the compressed air A can, in the absence of pressurised gas fuel G, enter the manifold 3 by way of the purge holes 14 in order to pressurise the manifold before the air exhausts through the orifices 4a and 4b.

Nested within a radially inner wall 16 of the gas manifold 3 is a secondary fuel injector 17 which receives liquid fuel L from a fuel manifold (not shown) and injects it into the combustion zone 2. This is intended to assist the combustion process during starting of the engine and during operation at low powers. Surrounding the secondary injector 17 is an annular air passage 20 from which further compressed air A is injected into the combustion zone 2. As indicated by the arrows B, some of the compressed air A from passage 20 also enters the interior of the secondary injector 17 through slots or passages (not shown) in the injector body. Injector 17 projects a pattern of liquid fuel and air into the combustion zone 2, the air leaving the injector as a high velocity divergent swirling cone centred on centreline CL and liquid fuel L being picked up by the air as it leaves the injector and projected into the combustion zone 2 as a lower velocity divergent swirling conical thin sheet of fuel/air mixture surrounding the cone of air, as shown by the dashed arrows. The internal constructional details of injector 17 which achieve this are not shown or described here, since they are not essential to understanding or practice of the present invention. Surrounding the thin conical sheet of liquid fuel as it leaves injector 17 is a further high velocity sheet of compressed air A from annular passage 20. Once again, the exit of passage 20 is provided with a ring of swirler vanes 22 to swirl this air sheet about centreline CL in the same rotational sense as the injector 17 swirls the sheet of liquid fuel and the central cone of air.

It will be evident that such injection of co-rotating bodies of air and liquid fuel moving at different velocities with consequent shear and centrifugal forces quickly breaks up and atomises the liquid fuel and begins to distribute a fuel/air mixture around the combustion zone 2, where it is burnt. The resulting circulation of combustion products is shown by wide arrows.

During operation on liquid fuel alone, combustion products circulating close to the gas injector tend to enter the manifold 3 through fuel injector orifices 4a and 4b. In prior patent GB 2,283,088 B, this problem was solved in a similar but not identical design of "dual fuel" combustor by the provision of a ring of air purge holes 14, which act to pressurise manifold 3. However, at some combustion conditions experienced during tests of the present design, when the combustor was being operated on liquid fuel, combustion products were observed to enter the manifold 3 through orifices 4b, as indicated by arrow P. This tendency is believed to be enhanced by a venturi effect, whereby the flow of air from the purge holes 14 across the mouth of the swirler vane passage 8 creates a region of low pressure in the vane passage 8 that draws in the combustion products.

The combustion products are at a high temperature and cause damage to the swirlers 6, which are designed to withstand only the lower temperatures of the input gas fuel G and compressed air A. Recirculation of the combustion products past swirlers 6, through manifold 3 and out through orifices 4a is also a hazard. Solids from the combustion products are deposited in the gas manifold 3 and the efficiency of the combustor reduced.

A fuel injector according to the invention is illustrated in Figure 2, using the same reference numerals as Figure 1. A further ring of purge holes 15 is provided in the outer wall 13 of the swirler vane passage 8 to ensure that the static pressure in the passage 8 is always greater than that in the primary zone 2 of the combustor during operation on liquid fuel. The arrows in Figure 2 show how the resulting flow of air through the swirler vane passage 8 obviates the ingress of combustion products past the swirler vanes.

The second set of purge holes 15 must be located in the swirler vane passage 8 to overcome the venturi effect of the air flow from the first set of purge holes 14. They may be directed in an exclusively radial sense, in which case they would cause effective impingement cooling of the cylindrical dividing wall 7. Preferably, however, the holes 15 are inclined both radially and lengthwise of the passage in the direction of the exit orifices 4b to enhance the air flow along the swirler vane passage 8 to the combustor chamber 2, in which case their impingement cooling effect is minimised. With the secondary purge holes situated and inclined as illustrated, i.e. situated near the orifices 4b between adjacent swirl vanes and inclined to project the purge air towards the radially inner edges of the orifices 4b, compressed air is encouraged to flow over and film-cool the external surface of the fuel injector cone 5, as shown by arrow F. This is beneficial because the fuel injector cone 5 is exposed to the heat of combustion and the compressed air provides a useful cooling effect. The oblique angle θ between the cylindrical wall 7 and the fuel injector cone 5 may be at a junction between two different materials and may therefore be particularly susceptible to damage by high temperatures. Hence, the air from purge holes 15 is most advantageously directed at the same angle to enhance its flow over the surface of the fuel injector cone 5.

When the injector is operating on its primary gas fuel G the gas fuel pressure is increased from zero and the flow or bleeding of air from the air passage 11 through both sets of apertures 14 and 15 consequently reduces as the opposing gas fuel pressure increases. Above this 'pressure balance' condition the increased gas pressure reverses the flow direction to cause gas bleeding through the apertures 14 and 15 to spill into the air passage 11. Such spillage is prevented from moving upstream and causing ignition flashback by the shroud 10, which confines and entrains the spillage in the fast flowing air stream close to the injector wall 13. The spilled fuel and air is further mixed by the swirlers 12 to provide a pre-mix of fuel and air before it emerges into the combustion zone 2. A further advantage of inclining the secondary purge holes 15 in the downstream direction as shown is that their inclination minimises backflow of gas from the swirler vane passage 8 into air passage 11.

In addition to the above purge and spillage/flashback considerations the provision of purging air during operation on the secondary (liquid) fuel resets the primary zone 2 stoichiometry advantageously. A leaner mixture is produced which is beneficial to smoke emissions control. Furthermore, on fuel change to LCV gas fuel (which, as explained above, eliminates the purge air flow through the purge holes) the primary zone stoichiometry becomes relatively richer which is beneficial to carbon monoxide emission control at low powers.

A passively purged fuel injector of the form described can also be used to reduce emissions of oxides of nitrogen (NOx) from the combustion process by increasing the aperture size of the holes 14 and 15 to allow a larger portion of the gas fuel to exit through the holes to the air passage 11 and swirlers 12. This portion will be partially mixed with swirler air and this will have the same effect as reducing the calorific value of the gas fuel and result in a reduction in NOx emissions.

The advantage of using this method for NOx control over premixed systems with pilot fuelling for starting and flame stabilization is the simplicity of both fuel and control systems as only one gas fuel manifold and one gas flow control are required.

At combustion conditions between starting and just before change over from liquid to gas fuel, the combustion chamber (primary zone 2) pressure is lower than the compressor air delivery pressure in the air passage 11 and gas manifold 3. At a given operating load condition the changeover to gas fuel will occur and the gas pressure in the manifold will rise above the air pressure in the air passage 11, therefore allowing gas to exit from the purge holes 14 (and possibly the secondary purge holes 15 depending on inclination) to mix with the air. The operating point at which this is achieved can be set by the design parameters of the holes, the air passages and the combustor pressure drop. The operating range over which this process occurs can be chosen to cover starting conditions only or any intermediate range up to the so-called "full speed, no load" point.

In the development of the invention, a series of trials were performed to compare the performance of the passively purged fuel injector with the most closely related prior art. These test results, shown in the table below, clearly demonstrate the benefits of the present invention over the prior art invention GB 2,283,088. In the table, Tₐ refers to the temperature in the swirler vane passage 8 and T_{b} refers to the temperature in the manifold 3.

| | | **T**_{**a**} **(°C)** | **T**_{**b**} **(°C)** |
|---|---|---|---|
| Prior art under start-up conditions | 1^{st} Test | 419 | 187 |
| | 2^{nd Test} | 749 | 342 |
| Prior art before fuel changeover | 1^{st} Test | 968 | 605 |
| | 2^{nd} Test | 986 | 724 |
| Invention: low load | | 367 | 408 |
| Invention: 20% load | | 362 | 399 |

Both series of tests carried out on the injector of GB 2,283,088 show in all cases Tₐ much greater than T_{b}. This shows that hot combustion products circulate back through the swirler vanes. The tests on the fuel injector of GB 2,283,088 had to be abandoned before performance under "low load" conditions could be monitored because Tₐ was at such a level that it was likely to cause damage to the fuel injector.

The above problem did not arise during performance tests of the apparatus of the present invention. Under both loading conditions, the results show Tₐ slightly lower than T_{b} and at a temperature comparable to the input compressed air temperature. From these results it can be inferred that purge air holes 15 prevent re-circulation of combustion products through the swirler vanes as well as through the main gas orifices and therefore overcome the problems associated with the prior art.

## Claims

1. A fuel injector (1) for a combustor of a gas turbine engine operable on first (G) and second (2) fluid fuels, in which a plurality of fuel orifices (4a, 4b) for injecting the first fuel into the combustor are exposed to combustion products during operation of the engine on the second fuel, the fuel injector comprising:
a fuel manifold (3) having an upstream portion for receiving the first fuel and a downstream portion for supplying the first fuel to the plurality of fuel orifices;
dividing wall means dividing the downstream portion of the fuel manifold into a radially outer annular fuel supply passage (8) for supplying a radially outer set of the plurality of fuel orifices (4a) and a radially inner annular fuel supply passage for (9) supplying a radially inner set of the plurality of fuel orifices (4b);
an annular air passage (11) for compressed air defined between an external wall (13) of the fuel manifold and an outer shroud member (10) surrounding the fuel injector;
a first set of air purge holes (14) in the external manifold wall (12), disposed upstream of the dividing wall means to permit fluid connection between the air passage (11) and the annular fuel manifold (3), and **characterized in** having
a second set of air purge holes 15 is in the external manifold wall downstream of the first set of purge holes to permit direct fluid connection between the air passage (11) and the radially outer annular fuel supply passage (8), whereby pressure in both the radially inner (9) and outer (8) annular fuel supply passages is maintained greater than that in the combustor (2) during operation of the engine on the second fuel, thus preventing ingress of hot combustion products through both the radially inner and outer sets of fuel orifices (4a, 4b).

2. A fuel injector according to claim 1, wherein the second set of purge holes are radially oriented to direct purge air to impinge on the dividing wall means between the radially outer fuel supply passage and the radially inner fuel supply passage.

3. A fuel injector according to claim 1, wherein the second set of air purge holes are inclined with respect to the longitudinal extent of the radially outer fuel supply passage so as to direct purge air into it with both radial and downstream components of flow.

4. A fuel injector according to claim 1, wherein the radially inner set of fuel orifices injects the first fuel into the combustor with components of velocity in both the downstream and radially outward directions, said orifices being provided in a generally conical end wall of the radially inner annular fuel supply passage, the end wall being convergent in the downstream direction from the radially outer set of fuel orifices, the second set of air purge holes being situated and inclined so as to direct purge air towards radially inner edges of the radially outer set of fuel orifices and thence along the outer surface of the conical end wall.

5. A fuel injector according to any preceding claim, wherein the outlet of the radially outer annular fuel supply passage is provided with a circular array of fluid deflecting vanes adapted to impart swirling motion to fluid flowing therepast.

6. A fuel injector according to claim 5, wherein each purge hole in the second set of purge holes is located between adjacent fluid deflecting vanes.

7. A fuel injector according to any preceding claim, wherein the annular air passage has exit orifices for introducing the compressed air into the combustor, the exit orifices being defined between adjacent fluid deflecting vanes in an annular array thereof which induce swirling motion in fluid flow therepast.

8. A fuel injector according to any preceding claim, wherein the first and second sets of purge holes are sized to allow sufficient of the first fuel to exit through the purge holes into the air passage to mix with the compressed air and thereby to have an effect on the combustion process equivalent to reducing the calorific value of the gas fuel so as to reduce production of oxides of nitrogen in the combustion process.

## Patentansprüche

1. Kraftstoffeinspritzer (1) für einen Zweistufen-Vergasungsbrenner eines Gasturbinenmotors, der mit einem ersten (G) und einem zweiten (L) fluiden Kraftstoff arbeiten kann, und in den mehrere Kraftstofföffnungen (4a, 4b) zum Einspritzen des ersten Kraftstoffs in den Vergasungsbrenner während des Betriebs des Motors mit den zweiten Kraftstoff Verbrennungsprodukten ausgesetzt sind, wobei der Kraftstoffeinspritzer aufweist:
eine Kraftstoffverteiler (3) mit einem stromaufwärts angeordneten Bereich zur Aufnahme des ersten Kraftstoffs und einem stromabwärts angeordneten Bereich zur Zuführung des ersten Kraftstoffs in die mehreren Kraftstofföffnungen,
Trennwände, die den stromabwärts angeordneten Bereich des Kraftstoffverteilers in eine radial äußere ringförmige Kraftstoffzuführungsleitung (8) zur Beschickung eines äußeren Satzes mehrerer Kraftstofföffnungen (4a) und
in eine radial innere ringförmige Kraftstoffzuführungsleitung (9) zur Beschickung eines radial inneren Satzes mehrerer Kraftstofföffnungen (4b) unterteilt,
eine ringförmige Luftleitung (11) für komprimierte Luft, die von einer äußeren Wand (13) des Kraftstoffverteilers und einem äußeren Abschirmelement (10), das den Kraftstoffeinspritzer umgibt, begrenzt wird,
einen ersten Satz Luftauslaßlöcher (14) in der äußeren Verteilerwand (13), der stromaufwärts der Trennwandeinrichtungen angeordnet ist, um eine Fluidverbindung zwischen der Luftleitung (11) und dem ringförmigen Kraftstoffverteiler (3) zu erlauben und
**gekennzeichnet ist durch**
einen zweiten Satz Luftauslaßlöcher (15) in der äußeren Verteilerwand stromabwärts des ersten Satzes Auslaßlöcher, um eine direkte Fluidverbindung zwischen der Luftleitung (11) und der radial äußeren ringförmigen Kraftstoffzuführleitung (8) zu erlauben, wobei der Druck sowohl in der radial inneren (9) als auch der äußeren (8) ringförmigen Kraftstoffzuführungsleitung während des Betriebs des Motors mit dem zweiten Kraftstoff größer gehalten wird als der in dem Vergasungsbrenner (2), womit ein Eintreten der heißen Verbrennungsprodukte sowohl **durch** den radial inneren als auch den äußeren Satz der Kraftstofföffnungen (4a, 4b) verhindert wird.

2. Kraftstoffeinspritzer nach Anspruch 1, wobei der zweite Satz Auslaßlöcher radial so ausgerichtet ist, daß er abgelassene Luft so leitet, daß sie auf die Trennwände zwischen der radial äußeren Kraftstoffzuführleitung und der radial inneren Kraftstoffzuführleitung trifft.

3. Kraftstoffeinspritzer nach Anspruch 1, wobei der zweite Satz Luftauslaßlöcher in bezug auf die Längserstreckung der radial äußeren Kraftstoffzuführleitung schräg steht, um so die abgelassene Luft sowohl mit der radialen als auch der stromabwärts gerichteten Strömungskomponenten in diese zu richten.

4. Kraftstoffeinspritzer nach Anspruch 1, wobei der radial innere Satz Kraftstofföffnungen den ersten Kraftstoff sowohl mit strombwärts gerichteten als auch radial nach außen gerichteten Geschwindigkeitskomponenten in den Vergasungsbrenner einspritzt, wobei die Öffnungen in einer allgemein konisch zusammenlaufenden Abschlußwand der radial inneren ringförmigen Kraftstoffzuführleitung vorgesehen sind, die Abschlußwand sich stromabwärts von dem radial äußeren Satz der Kraftstofföffnungen aus verjüngt, der zweite Satz Luftauslaßlöcher derart angeordnet ist und derart schräg steht, daß er die abgelassene Luft in Richtung der radial inneren Kanten des radial äußeren Satzes Kraftstofföffnungen richtet und damit entlang der Außenfläche der konischen Abschlußwand.

5. Kraftstoffeinspritzer nach einem der vorhergehenden Ansprüche, wobei der Auslaß der radial äußeren ringförmigen Kraftstoffzuführleitung mit einer ringförmigen Anordnung das Fluid ablenkender Flügel versehen ist, die geeignet sind, ein Fluid, das an ihnen vorbei strömt, in eine Wirbelbewegung zu versetzen.

6. Kraftstoffeinspritzer nach Anspruch 5, wobei jedes Auslaßloch des zweiten Satzes Auslaßlöcher zwischen benachbarten Fluid ablenkenden Flügeln angeordnet ist.

7. Kraftstoffeinspritzer nach einem der vorhergehenden Ansprüche, wobei die ringförmige Luftleitung Austrittsöffnungen zum Einführen der komprimierten Luft in den Vergasungsbrenner enthalten, wobei die Austrittsöffnungen von benachbarten Fluid ablenkenden Flügeln in einer ringförmigen Anordnung begrenzt werden, die das an ihnen vorbei strömende Fluid in Wirbelbewegung versetzen.

8. Einspritzer nach einem der vorhergehenden Ansprüche, wobei der erste und der zweite Satz Auslaßlöcher so bemessen sind, daß sie es erlauben, daß eine ausreichende Menge ersten Kraftstoffs durch die Auslaßlöcher in die Luftleitung treten, um sich mit der komprimierten Luft zu vermischen und damit auf den Verbrennungsprozeß eine einer Reduzierung des Heizwerts des Kraftstoffgases entsprechende Wirkung haben, um so die Erzeugung von Stickstoffoxiden während des Verbrennungsvorgangs zu reduzieren.

## Revendications

1. Injecteur de carburant (1) pour une chambre de combustion d'une turbine à gaz pouvant être actionné avec des premier et second carburants fluides (2), dans lequel une pluralité d'orifices de carburant (4a, 4b), permettant d'injecter le premier carburant dans la chambre de combustion, est exposée à des produits de combustion pendant le fonctionnement du moteur avec le second carburant, l'injecteur de carburant comprenant :
une rampe de distribution de carburant (3) ayant une partie en amont afin de recevoir le premier carburant et une partie en aval afin de fournir le premier carburant à la pluralité d'orifices de carburant ;
des moyens de paroi de séparation divisant la partie en aval de la rampe de distribution de carburant en un passage d'approvisionnement en carburant annulaire radialement externe (8) destiné à approvisionner une série radialement externe de la pluralité d'orifices de carburant (4a) et un passage d'approvisionnement en carburant annulaire radialement interne (9) destiné à approvisionner une série radialement interne de la pluralité d'orifices de carburant (4b). ;
un passage d'air annulaire (11) pour de l'air comprimé, défini entre une paroi externe (13) de la rampe de distribution de carburant et un élément de protection externe (10) entourant l'injecteur de carburant ;
une première série d'orifices d'épuration d'air (14) dans la paroi externe (13) de la rampe de distribution (12), agencée en amont des moyens de paroi de séparation afin de permettre une connexion de fluide entre le passage d'air (11) et la rampe de distribution de carburant annulaire (3), et **caractérisé en ce qu'**il comprend :
une seconde série d'orifices d'épuration d'air (15) dans la paroi externe de la rampe de distribution en aval de la première série d'orifices d'épuration d'air afin de permettre une connexion de fluide directe entre le passage d'air (11) et le passage d'approvisionnement en carburant annulaire radialement externe (8), moyennant quoi la pression dans les passages d'approvisionnement en carburant annulaires radialement interne (9) et radialement externe (8) est maintenue à un niveau supérieur à celui dans la chambre de combustion (2) pendant le fonctionnement du moteur avec le second carburant, empêchant ainsi toute entrée de produits de combustion chauds à travers les séries radialement interne et externe (4a, 4b)des orifices de carburants.

2. Injecteur de carburant selon la revendication 1, dans lequel la seconde série d'orifices d'épuration d'air est orientée de manière radiale afin de diriger l'air d'épuration de façon à empiéter sur les moyens de paroi de séparation entre le passage d'approvisionnement en carburant radialement externe et le passage d'approvisionnement en carburant radialement interne.

3. Injecteur de carburant selon la revendication 1, dans lequel la seconde série d'orifices d'épuration d'air est inclinée par rapport à la portée longitudinale du passage d'approvisionnement en carburant radialement externe, de manière à diriger l'air d'épuration à l'intérieur avec les composants de flux radiaux et en aval.

4. Injecteur de carburant selon la revendication 1, dans lequel la série radialement interne d'orifices de carburant injecte le premier carburant dans la chambre de combustion avec des composants de vitesse dans les directions aval et radialement externe, lesdits orifices étant agencés dans une paroi d'extrémité généralement conique du passage d'approvisionnement en carburant annulaire radialement interne, la paroi d'extrémité convergeant dans la direction aval depuis la série radialement externe d'orifices de carburant, la seconde série d'orifices d'épuration d'air étant située et inclinée de manière à diriger l'air d'épuration vers des bords radialement internes de la série radialement externe d'orifices de carburant et, de ce fait, le long de la surface externe de la paroi d'extrémité conique.

5. Injecteur de carburant selon l'une quelconque des revendications précédentes, dans lequel la sortie du passage d'approvisionnement de carburant annulaire radialement externe est dotée d'un jeu circulaire de vannes de déviation de fluide adaptées pour fournir un mouvement tournoyant au fluide s'écoulant au-delà de celles-ci.

6. Injecteur de carburant selon la revendication 5, dans lequel chaque orifice d'épuration dans la seconde série d'orifices d'épuration est situé entre des vannes adjacentes de déviation du fluide.

7. Injecteur de carburant selon l'une quelconque des revendications précédentes, dans lequel le passage d'air annulaire comprend des orifices de sortie permettant d'introduire de l'air comprimé dans la chambre de combustion, les orifices de sortie étant définis entre des vannes adjacentes de déviation du fluide selon un jeu annulaire, ce qui procure un mouvement tournoyant au flux de fluide s'écoulant au-delà de celles-ci.

8. Injecteur de fluide selon l'une quelconque des revendications précédentes, dans lequel les première et seconde séries d'orifices d'épuration ont une taille permettant de faire sortir une quantité suffisante du premier carburant à travers les orifices d'épuration dans le passage d'air afin qu'il soit mélangé avec l'air comprimé et, de ce fait, afin d'avoir un effet sur le procédé de combustion équivalant à la réduction du pouvoir calorifique du combustible gazeux, de manière à réduire la production d'oxydes d'azote dans le procédé de combustion.
